# EUROPEAN PATENT APPLICATION

(11) **EP 4 343 633 A1**
(43) Date of publication of application: **27.03.2024**
(21) Application number: 21947207.3
(22) Date of filing: 25.06.2021
(51) Int. Cl.: G06N 3/063, G06F 17/10

(54) **CONVOLUTIONAL NEURAL NETWORK INFERENCE PROCESSING DEVICE AND CONVOLUTIONAL NEURAL NETWORK INFERENCE PROCESSING METHOD**

(71) Applicant: Nippon Telegraph And Telephone Corporation, Chiyoda-ku Tokyo 100-8116 (JP)
(72) Inventor: YOSHIDA, Shuhei, Musashino-shi, Tokyo 180-8585 (JP); UZAWA, Hiroyuki, Musashino-shi, Tokyo 180-8585 (JP); KOBAYASHI, Daisuke, Musashino-shi, Tokyo 180-8585 (JP); NAKAMURA, Ken, Musashino-shi, Tokyo 180-8585 (JP); HATTA, Saki, Musashino-shi, Tokyo 180-8585 (JP); OMORI, Yuya, Musashino-shi, Tokyo 180-8585 (JP)
(74) Representative: DREISS Patentanwälte PartG mbB
(86) International application number: PCT/JP2021/024222
(87) International publication number: WO 2022/269928

(57) **Abstract**

A first aspect of the present disclosure is a convolutional neural network inference processing device that performs processing in a convolutional neural network including a plurality of convolution layers and a residual layer that adds intermediate data related to the plurality of convolution layers as an addition target to a processing result by the plurality of convolution layers for each tile that is data obtained by dividing input data into a predetermined size, the convolutional neural network inference processing device including an inconsistency data storage unit that stores inconsistency data that is data at a portion where there is inconsistency between the processing result and the intermediate data, a past layer data storage unit that stores past layer data that is an addition target in a residual layer generated using inconsistency data related to the tile for which processing has been performed in a past and the intermediate data, and a processing unit that performs processing by the plurality of convolution layers and processing by the residual layer that adds the past layer data to the processing result.

## Description

### Technical Field

The disclosed technology relates to a convolutional neural network inference processing device and a convolutional neural network inference processing method.

### Background Art

In recent years, research and development related to convolutional neural network (CNN) inference processing have been actively conducted. In particular, research and development of CNN inference processing have been actively conducted in order to apply image recognition and object recognition using a CNN to a scene where a real-time property, power saving, and area saving are required, such as a monitoring camera and a drone. In a CNN model that performs CNN inference processing, performing processing in units of layers of the model and saving a processing result for each of the layers in an external memory are common. However, there is an issue that an external memory band is pressed, which is a bottleneck in processing performance, in a case of a CNN model in which a data amount of output data of each layer is large.

A CNN model includes a plurality of convolution layers, and as a processing method of general CNN inference processing, there is a method of performing processing in units of layers. In this method, when processing of any layer is performed, convolution processing is performed on all input data using a convolution filter, and then the processing proceeds to processing of the next layer. Since a convolution processing result is used as input data of the next layer, all convolution processing result for each layer need to be held in a memory. In a CNN model, a data amount of a convolution processing result is increasing in order to improve the accuracy, and a data amount in a processing result for each layer is difficult to be held in an internal memory. Therefore, a method is adopted in which the processing result for each layer is transferred to an external memory and read again at the time of processing of the next layer. However, the external memory band also has an upper limit, which may be a bottleneck in processing performance.

As a method of reducing the external memory band in the CNN inference processing, there is a Layer Fusion method (Non Patent Literature 1). In this method, processing in a plurality of layers is continuously performed in units of "tiles" obtained by dividing input data into grids. By the processing bring performed in units of tiles, an output data amount of each layer can be reduced to such an extent that it can be stored in the internal memory. Therefore, data transferred to the external memory can be held in the internal memory, and the external memory band can be reduced.

### Citation List

### Non Patent Literature

Non Patent Literature 1: Fabrizio Indirli et al., A Tile-based Fused-layer CNN Accelerator for FPGAs (2020 27th IEEE International Conference on Electronics, Circuits and Systems (ICECS))

### Summary of Invention

### Technical Problem

Meanwhile, a CNN model may include a residual layer that adds a processing result (intermediate data) by a past convolution layer to a processing result by a plurality of convolution layers in the plurality of continuous convolution layers.

However, in a configuration of Cited Literature 1, a memory for holding data that is an addition target in a residual layer is not provided, although a memory for holding output data in units of tiles is provided. Therefore, in a case where the Layer Fusion method is applied to a CNN model including a residual layer, data that is an addition target in the residual layer needs to be transferred to an external memory band, and the external memory band is not necessarily reduced.

The present disclosure has been made in view of such circumstances, and an object thereof is to propose a convolutional neural network inference processing device and a convolutional neural network inference processing method capable of reducing an external memory band in a case where the Layer Fusion method is applied to a CNN model including a residual layer.

### Solution to Problem

A first aspect of the present disclosure is a convolutional neural network inference processing device that performs processing in a convolutional neural network including a plurality of convolution layers and a residual layer that adds intermediate data related to the plurality of convolution layers as an addition target to a processing result by the plurality of convolution layers for each tile that is data obtained by dividing input data into a predetermined size, the convolutional neural network inference processing device including an intermediate data storage unit that stores the intermediate data, an inconsistency data storage unit that stores inconsistency data that is data at a portion at which there is inconsistency between the processing result and the intermediate data, a past layer data storage unit that stores past layer data that is an addition target in a residual layer generated using inconsistency data related to the tile for which processing has been performed in the past and the intermediate data, and a processing unit that performs processing by the plurality of convolution layers and processing by the residual layer that adds the past layer data to the processing result.

A second aspect of the present disclosure is a convolutional neural network inference processing method of performing processing in a convolutional neural network including a plurality of convolution layers and a residual layer that adds intermediate data related to the plurality of convolution layers as an addition target to a processing result by the plurality of convolution layers for each tile that is data obtained by dividing input data into a predetermined size, the convolutional neural network inference processing method including storing the intermediate data, storing inconsistency data that is data at a portion at which there is inconsistency between the processing result and the intermediate data, storing past layer data that is an addition target in a residual layer generated using inconsistency data related to a tile for which processing has been performed in the past and the intermediate data, and performing processing by the plurality of convolution layers and processing by the residual layer that adds the past layer data to the processing result.

### Advantageous Effects of Invention

According to the disclosed technology, an external memory band can be reduced in a case where the Layer Fusion method is applied to a CNN model including a residual layer.

### Brief Description of Drawings

Fig. 1 is a schematic diagram illustrating an example of a neural network according to each embodiment.
Fig. 2 is a schematic diagram illustrating an example of processing of the Layer Fusion method by a CNN including a residual layer according to each embodiment.
Fig. 3 is a schematic diagram illustrating an example of input data used for description of tiles obtained by dividing according to each embodiment.
Fig. 4 is a block diagram illustrating a hardware configuration of a convolutional neural network inference processing device according to each embodiment.
Fig. 5 is a block diagram illustrating an example of a functional configuration of a convolutional neural network inference processing device 10 according to a first embodiment.
Fig. 6 is a schematic diagram illustrating an example of a flow of data in processing performed by a convolutional neural network according to each embodiment.
Fig. 7 is a flowchart illustrating an example of inference processing according to each embodiment.
Fig. 8 is a block diagram illustrating an example of a functional configuration of a convolutional neural network inference processing device 10 according to a second embodiment.
Fig. 9 is a block diagram illustrating an example of processing in a plurality of integration layers according to each embodiment.

### Description of Embodiments

Hereinafter, exemplary modes for carrying out the present disclosure will be described in detail with reference to the drawings.

### [First Embodiment]

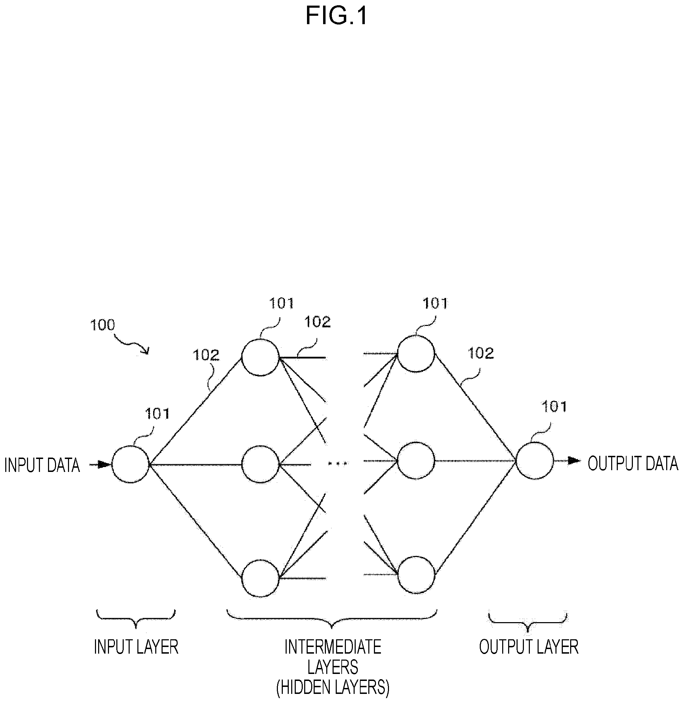

First, processing of a convolutional neural network (hereinafter, referred to as a "CNN") including a residual layer to which the Layer Fusion method is applied will be described with reference to Figs. 1 to 3. Fig. 1 is a schematic diagram illustrating an example of a neural network according to the present embodiment. Hereinafter, performing convolution processing using a filter of N pixels * N pixels is referred to as "N * N convolution processing". The convolution processing according to the present embodiment performs convolution by sliding the filter one by one. In the present embodiment, N pixels * N pixels is referred to as "N * N".

As an example, as illustrated in Fig. 1, a neural network 100 includes a plurality of layers including nodes 101 that perform processing, such as an input layer, an intermediate layer (hidden layer), and an output layer. In the neural network 100, nodes 101 of each layer are connected by edges 102, and data processed by each of the nodes 101 is propagated and processed in the order of the input layer, intermediate layers, and the output layer.

The CNN according to the present embodiment includes convolution layers and a residual layer in the intermediate layers, processes image data input as input data by the Layer Fusion method, and outputs output data. Here, in the Layer Fusion method, input data is divided into blocks (hereinafter, referred to as "tiles") having a predetermined size, and processing up to a predetermined layer is continuously performed for each of the tiles.

In a normal CNN, input data is divided into tiles, and in a case where processing of all the tiles is completed in one layer, the processing proceeds to the next layer and is performed. On the other hand, in a CNN of the Layer Fusion method, input data is divided into tiles, and processing of a plurality of layers is continuously performed in one tile. The processing is different from normal CNN processing in that processing is performed for each of the tiles such that the processing of a plurality of layers is performed for the next tile in a case where processing of a predetermined layer is completed.

The residual layer is a layer that adds an addition target to a processing result by the convolution layers. The residual layer adds, as an addition target, data input to one convolution layer located upstream or data processed by one convolution layer located upstream among a plurality of convolution layers. By the data processed by the convolution layer located upstream being added to the processing result, a feature amount obtained upstream is directly transmitted downstream in continuous layers, and deterioration of the feature amount due to repeated performance of convolution processing is suppressed. Note that a mode in which the residual layer according to the present embodiment adds data generated using data processed by one convolution layer among a plurality of convolution layers as an addition target will be described.

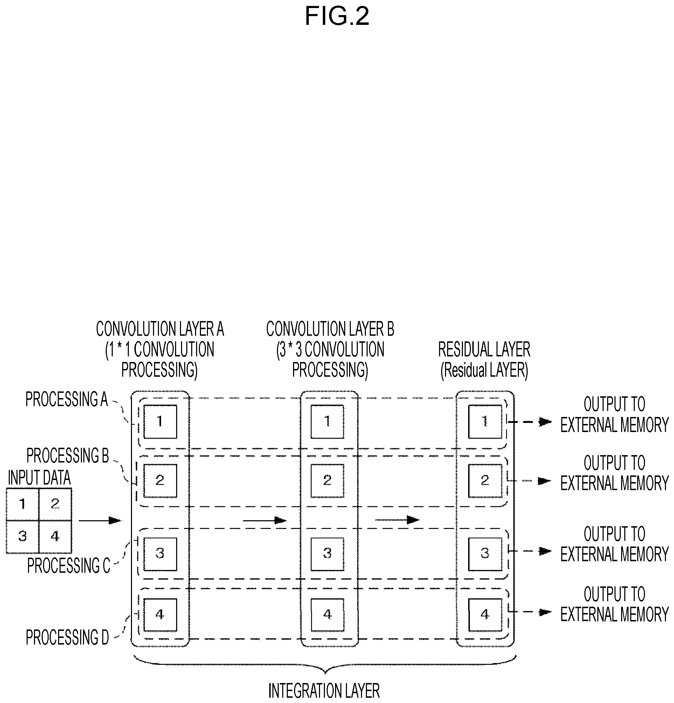

Fig. 2 is a schematic diagram illustrating an example of processing of the Layer Fusion method by a CNN including a residual layer according to the present embodiment.

As illustrated in Fig. 2, the CNN of the Layer Fusion method according to the present embodiment performs, as processing A, 1 * 1 convolution processing in a convolution layer A for a tile 1 obtained by dividing, and then performs 3 * 3 convolution processing in a convolution layer B. As the processing A, a processing result (hereinafter, referred to as "intermediate data") of the convolution layer A is added to a processing result of the convolution layer B in the residual layer, and is transmitted to an external memory and output as output data after performance of a plurality of types of convolution processing. Furthermore, in a case where the processing A in the tile 1 is completed, processing B in a tile 2, processing C in a tile 3, and processing D in a tile 4 are sequentially performed similarly. Note that, in the present embodiment, layers that perform a series of processing from the convolution layer A to the residual layer are referred to as an "integration layer". In the present embodiment, a mode in which the residual layer in the integration layer adds an addition target generated from the intermediate data processed by the convolution layer A to the processing result of the convolution layer B that belongs to the integration layer will be described.

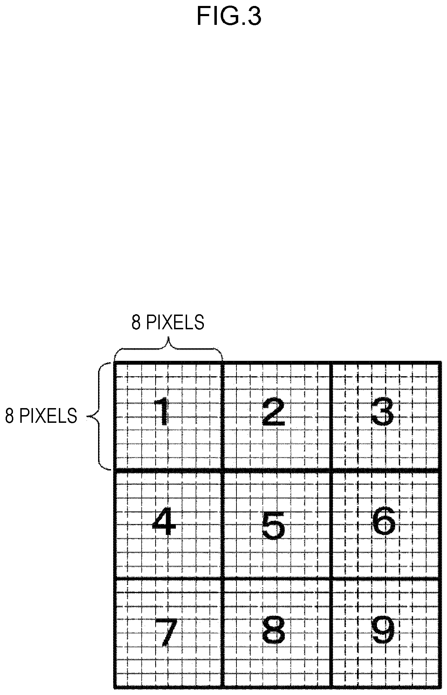

As an example, as illustrated in Fig. 3, for the tiles according to the present embodiment, data obtained by dividing 24 * 24 input data into 8 * 8 will be described as one tile. In the present embodiment, a mode will be described in which processing is performed in the order of the tile 1 to a tile 9 so that the order of tiles for which processing is performed proceeds from left to right and from top to bottom using the tile 1 located at the upper left of the input data illustrated in Fig. 3 as a base point.

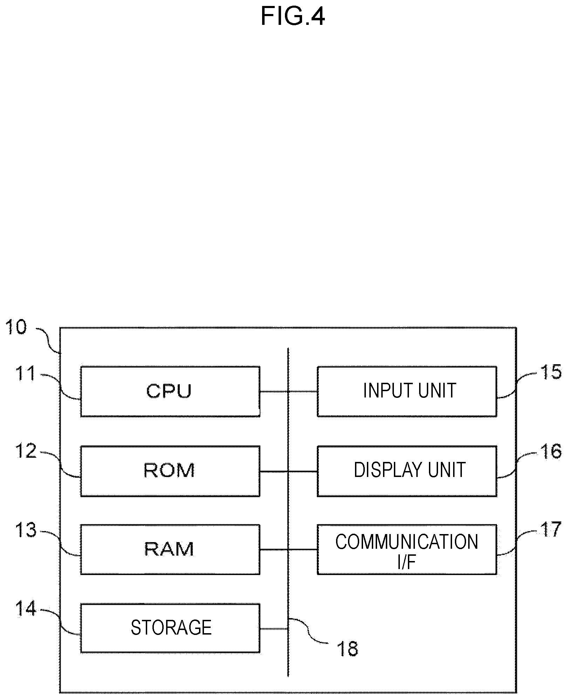

Next, a hardware configuration of a convolutional neural network inference processing device 10 according to the present embodiment will be described with reference to Fig. 4. Fig. 4 is a block diagram illustrating the hardware configuration of the convolutional neural network inference processing device 10 according to the present embodiment.

As illustrated in Fig. 4, the convolutional neural network inference processing device 10 includes a central processing unit (CPU) 11, a read only memory (ROM) 12, a random access memory (RAM) 13, a storage 14, an input unit 15, a display unit 16, and a communication interface (I/F) 17. The components are communicably connected to each other via a bus 18.

The CPU 11 is a central processing unit, performs various programs, and controls each unit. That is, the CPU 11 reads a program from the ROM 12 or the storage 14 and performs the program using the RAM 13 as a working area. The CPU 11 controls each of the components described above and performs various types of calculation processing according to programs stored in the ROM 12 or the storage 14. In the present embodiment, the ROM 12 or the storage 14 stores an inference processing program for performing processing by a CNN.

The ROM 12 stores various programs and various types of data. The RAM 13 temporarily stores a program or data as a working area. The storage 14 includes a storage device such as a hard disk drive (HDD) or solid state drive (SSD) and stores various programs including an operating system and various types of data.

The input unit 15 includes a pointing device such as a mouse and a keyboard, and is used to perform various types of input.

The display unit 16 is, for example, a liquid crystal display and displays various types of information. The display unit 16 may function as the input unit 15 by adopting a touch panel system.

The communication interface 17 is an interface for communicating with another device such as a display device. For the communication, for example, a wired communication standard such as Ethernet (registered trademark) or FDDI, or a wireless communication standard such as 4G, 5G, or Wi-Fi (registered trademark) is used. The communication interface 17 acquires input data from the external memory and transmits output data to the external memory.

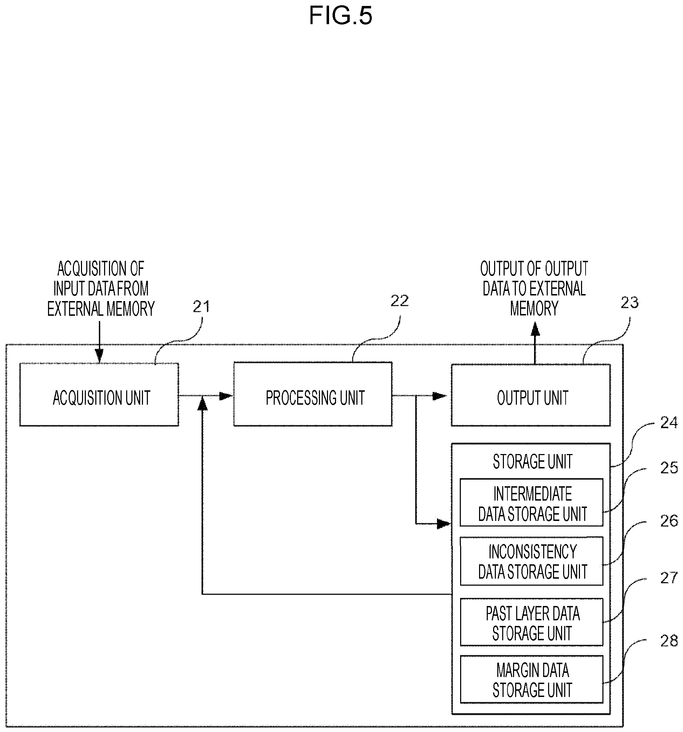

Next, a functional configuration of the convolutional neural network inference processing device 10 will be described with reference to Fig. 5. Fig. 5 is a block diagram illustrating an example of the functional configuration of the convolutional neural network inference processing device 10 according to the present embodiment.

As illustrated in Fig. 5, the convolutional neural network inference processing device 10 includes an acquisition unit 21, a processing unit 22, an output unit 23, and a storage unit 24 as the functional configuration. The CPU 11 performs the inference processing program to function as the acquisition unit 21, the processing unit 22, the output unit 23, and the storage unit 24. The storage unit 24 includes an intermediate data storage unit 25, an inconsistency data storage unit 26, a past layer data storage unit 27, and a margin data storage unit 28.

The acquisition unit 21 acquires input data for performing processing by the integration layer from the external memory (not illustrated).

The processing unit 22 performs processing of each of the layers related to the CNN including the convolution layers and the residual layer. Here, the processing unit 22 divides the input data acquired by the acquisition unit 21 into tiles that are data of a predetermined size, and performs processing of each of the layers related to the CNN for each of the tiles. For example, as illustrated in Fig. 3, the processing unit 22 divides image data into 8 * 8 tiles.

The output unit 23 outputs a processing result processed by the processing unit 22 to the external memory (not illustrated).

The storage unit 24 stores each piece of data processed by the processing unit 22 in the intermediate data storage unit 25, the inconsistency data storage unit 26, the past layer data storage unit 27, and the margin data storage unit 28.

The intermediate data storage unit 25 is used to store intermediate data processed by a convolution layer in the processing unit 22 and transfer data from the convolution layer to a convolution layer. For example, the intermediate data storage unit 25 stores intermediate data processed by the convolution layer A illustrated in Fig. 2. When storing intermediate data processed by the next convolution layer (for example, convolution layer B illustrated in Fig. 2), the intermediate data storage unit 25 erases stored data and stores the currently processed intermediate data.

The inconsistency data storage unit 26 stores data of a portion where there is inconsistency between a processing result by a plurality of convolution layers and intermediate data. For example, a 7 * 7 processing result processed by the plurality of convolution layers and 8 * 8 intermediate data processed by the convolution layer A illustrated in Fig. 2 have different dimensions, and there is inconsistency. The inconsistency data storage unit 26 stores data of a portion where there is inconsistency with the 7 * 7 processing result in the 8 * 8 intermediate data (for example, right end and lower end of the intermediate data). Note that inconsistency data is used in a tile to be subsequently processed when past layer data to be described below is generated, and the used inconsistency data is erased from the inconsistency data storage unit 26.

The past layer data storage unit stores past layer data that is an addition target in the residual layer using inconsistency data in a tile processed in the past and intermediate data in a tile currently processed. For example, in a case where there is inconsistency data related to a tile adjacent to a tile that is currently processed, the past layer data storage unit 27 generates and stores 7 * 7 past layer data using the inconsistency data and intermediate data of the tile that is currently processed. Note that the past layer data is used as an addition target in the residual layer, and the used past layer data is erased from the past layer data storage unit 27.

The margin data storage unit 28 stores data of a portion adjacent to an unprocessed tile to be processed subsequently in intermediate data of a tile that is currently processed (right end and lower end of the intermediate data). Here, the convolution layer B according to the present embodiment extends the dimension of 8 * 8 intermediate data to a dimension of 9 * 9, and performs convolution processing. When the processing by the convolution layer B is performed, in a case where there is margin data in a tile adjacent to the tile that is currently processed and processed in the past, the processing unit 22 extends intermediate data using the margin data. The used margin data is erased from the margin data storage unit 28.

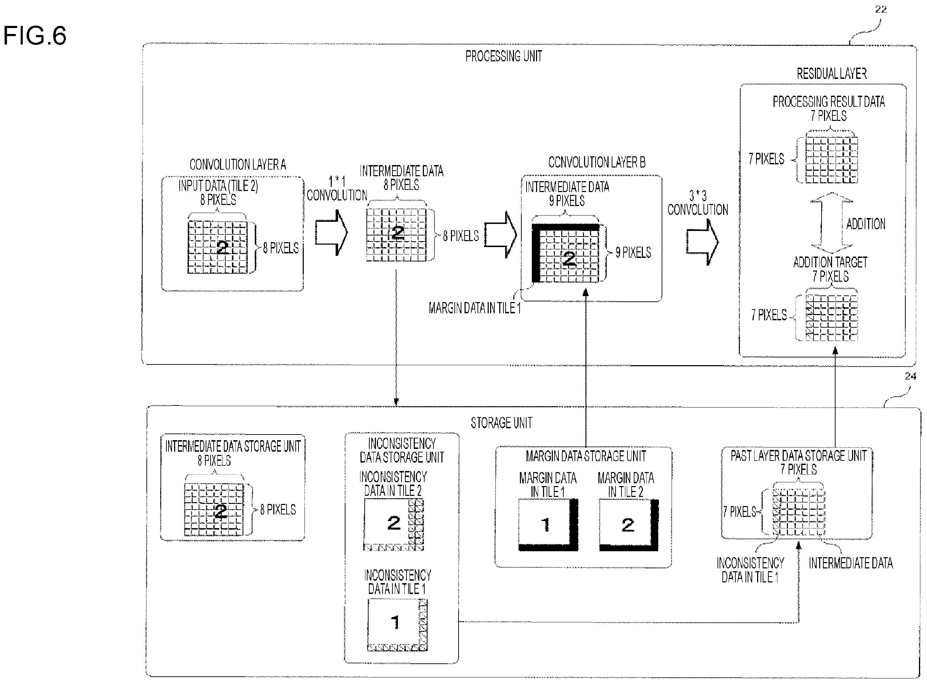

Next, each type of data stored in the storage unit 24 will be described with reference to Fig. 6. Fig. 6 is a schematic diagram illustrating an example of a flow of data in processing performed by the convolutional neural network according to the present embodiment. In the present embodiment, as an example, a data flow when the tile 2 illustrated in Fig. 3 is processed as input data will be described.

As illustrated in Fig. 6, in a case where the 8 * 8 tile 2 is input, the processing unit 22 performs processing by the convolution layer A and outputs 8 * 8 intermediate data. Here, the storage unit 24 stores the intermediate data in the intermediate data storage unit 25 until input to the next convolution layer B is performed.

The storage unit 24 generates past layer data using the intermediate data in the tile 2 that is currently processed and inconsistency data in the tile 1 (inconsistency data in the tile 1 processed in the past), and stores the past layer data in the past layer data storage unit 27. Here, in consideration of arrangement of adjacent tiles, the storage unit 24 combines inconsistency data corresponding to a portion in contact with the tile 2 in the tile 1 (right end of the tile 1) to the left end of the intermediate data in the tile 2 to generate 7 * 7 past layer data, and stores the past layer data in the past layer data storage unit 27.

Furthermore, when the past layer data is generated, the storage unit 24 stores intermediate data in the tile 2 that is not used and the inconsistency data in the tile 1 in the inconsistency data storage unit 26. As described above, by intermediate data of an adjacent tile being stored as inconsistency data, a feature of a boundary portion generated by division into tiles can be reflected in the residual layer to be described below. Furthermore, since the inconsistency data is intermediate data when the processing by the convolution layer A is performed, 1 * 1 convolution processing at the boundary portion does not need to be re-performed, and the processing amount is reduced.

On the other hand, the processing unit 22 performs processing of the next convolution layer B. When the processing of the convolution layer B is performed, the processing unit 22 expands the intermediate data in the tile 2 stored in the intermediate data storage unit 25 using margin data in the tile 1 stored in the margin data storage unit 28. Here, in consideration of arrangement of the adjacent tiles, the processing unit 22 combines margin data corresponding to the portion in contact with the tile 2 in the tile 1 (right end of the tile 1) to the left end of the intermediate data in the tile 2 to generate 9 * 9 intermediate data, and performs convolution processing. Since there is no tile adjacent to the upper end of tile 2, the upper end of tile 2 is expanded by zero padding. In other words, in a case where there is margin data in a tile that is processed in the past and is adjacent to a tile that is currently processed in any tile, the processing unit 22 extends intermediate data using the margin data. As described above, a feature of a boundary portion generated by division into tiles can be extracted by margin data in an adjacent tile being combined and convolution processing being performed. Furthermore, since the margin data is data for which the 1 * 1 processing is performed, 1 * 1 convolution processing at the boundary portion does not need to be re-performed, and the processing amount is reduced.

When the processing by the convolution layer B is performed by the processing unit 22, the storage unit 24 stores data corresponding to a portion of the right end and the lower end of the intermediate data and the margin data storage unit 28, and stores margin data that is not used in the margin data storage unit 28.

The processing unit 22 performs the 3 * 3 convolution processing on the extended 9 * 9 intermediate data, and outputs 7 * 7 processing result data. As processing by the residual layer, the processing unit 22 adds the past layer data stored in the past layer data storage unit 27 to the 7 * 7 processing result data as an addition target, and outputs a result of the addition to the output unit 23 as a processing result of the integration layer.

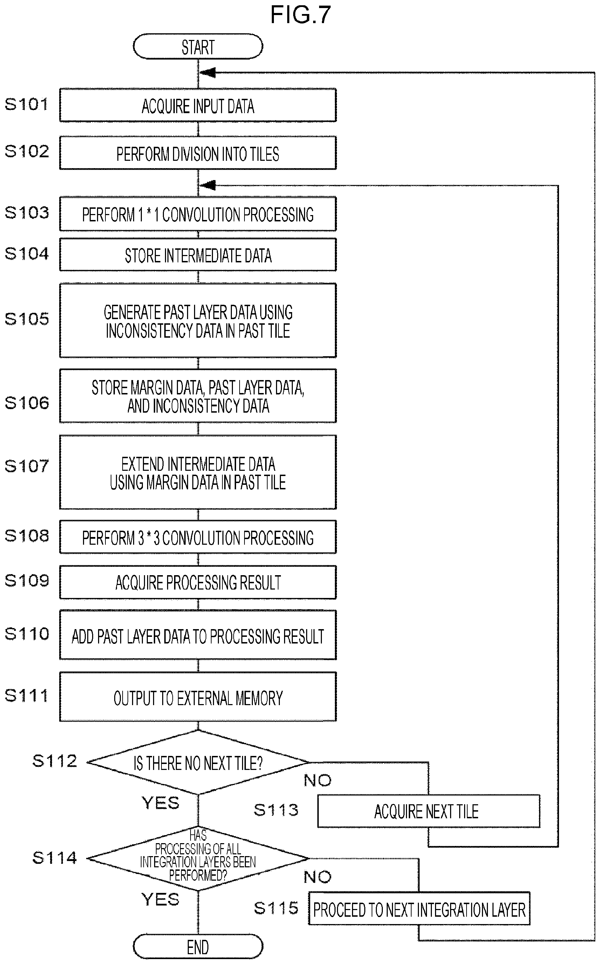

Next, operation of the convolutional neural network inference processing device 10 according to the present embodiment will be described with reference to Fig. 7. Fig. 7 is a flowchart illustrating an example of inference processing according to the present embodiment. The CPU 11 reads and performs the inference processing program from the ROM 12 or the storage 14, thereby the inference processing program illustrated in Fig. 7 is performed. The inference processing program illustrated in Fig. 7 is performed, for example, in a case where image data is input as input data and an instruction to perform the inference processing is input. The output unit 23 outputs a processing result of the integration layer to the external memory.

In step S101, the CPU 11 acquires input data.

In step S102, the CPU 11 divides the input data into predetermined tiles.

In step S103, the CPU 11 performs 1 * 1 convolution processing.

In step S104, the CPU 11 acquires and stores intermediate data as the processing result of the 1 * 1 convolution processing.

In step S105, the CPU 11 generates and stores past layer data using inconsistency data in a tile processed in the past and the intermediate data in a tile currently processed.

In step S106, the CPU 11 stores margin data, inconsistency data, and the past layer data. Here, margin data that is stored in the margin data storage unit 28 and is not used and data of a portion adjacent to an unprocessed tile in the intermediate data are stored as the margin data. Furthermore, inconsistency data that is stored in the inconsistency data storage unit 26 and is not used as the past layer data and data that is not used as the past layer data in the intermediate data are stored as the inconsistency data.

In step S107, the CPU 11 extends the intermediate data using margin data in the past tile stored in the margin data storage unit 28. Here, in a case where there is no margin data in a tile that is processed in the past and adjacent to the tile currently processed, the intermediate data is extended by zero padding.

In step S108, the CPU 11 performs 3 * 3 convolution processing using the extended intermediate data.

In step S109, the CPU 11 acquires the processing result of the 3 * 3 convolution processing.

In step S110, the CPU 11 adds the past layer data stored in the past layer data storage unit 27 to the acquired processing result.

In step S 111, the CPU 11 outputs a result of the addition to the external memory as an output result of the integration layer.

In step S112, the CPU 11 determines whether there is no next tile. In a case where there is no next tile (step S112: YES), the CPU 11 proceeds to step S114. On the other hand, in a case where there is a next tile (step S112: NO), the CPU 11 proceeds to step S113.

In step S113, the CPU 11 acquires data of the next tile, and proceeds to step S103.

In step S114, the CPU 11 determines whether processing of all integration layers has been performed. In a case where the processing of all the integration layers has been performed (step S114: YES), the CPU 11 ends the processing. On the other hand, in a case where the processing of all the integration layers has not been performed (step S114: NO), the CPU 11 proceeds to step S115.

In step S115, the CPU 11 proceeds to a next integration layer and proceeds to step S101.

As described above, according to the present embodiment, an external memory band can be reduced in a case where the Layer Fusion method is applied to a CNN model including a residual layer.

### [Second Embodiment]

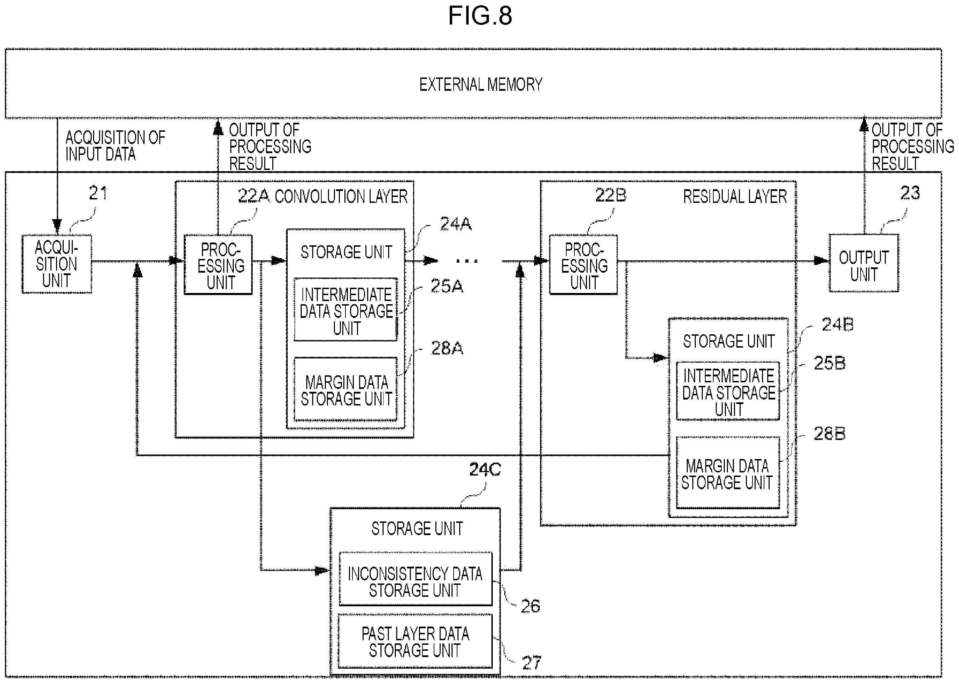

In the first embodiment, a mode has been described in which processing in an integration layer (convolution layers and residual layer) is performed using the single processing unit 22 and the storage unit 24. In the present embodiment, a mode in which a processing unit 22 and a storage unit 24 (hereinafter, referred to as a "processing unit") are allocated to each layer in an integration layer will be described with reference to Fig. 8.

Note that a diagram illustrating an example of a neural network (see Fig. 1), a diagram illustrating an example of a CNN including a residual layer in the Layer Fusion method (see Fig. 2), and a diagram illustrating an example of input data used for description of tiles (see Fig. 3) are similar to those of the first embodiment, and thus description thereof is omitted. Furthermore, a diagram illustrating a hardware configuration of a convolutional neural network inference processing device 10 (see Fig. 4), a diagram illustrating an example of a data flow in the CNN (see Fig. 6), and a diagram illustrating an example of processing performed by the CNN (see Fig. 7) are similar to those of the first embodiment, and thus description thereof is omitted.

Fig. 8 is a block diagram illustrating an example of a functional configuration of the convolutional neural network inference processing device 10 according to the present embodiment. As illustrated in Fig. 8 as an example, the convolutional neural network inference processing device 10 includes an acquisition unit 21, a processing unit 22A, a processing unit 22B, an output unit 23, and a storage unit 24A, a storage unit 24B, and a storage unit 24C. For example, the processing unit 22A and the storage unit 24A are allocated as a processing unit in a convolution layer, and the storage unit 24A includes an intermediate data storage unit 25A and a margin data storage unit 28A. The processing unit 22B and the storage unit 24B are allocated as a processing unit in a residual layer, and the storage unit 24B includes an intermediate data storage unit 25B and a margin data storage unit 28B. The storage unit 24C can be shared and used by each layer in the integration layer, and the storage unit 24C includes an inconsistency data storage unit 26 and a past layer data storage unit 27.

As illustrated in Fig. 8, a processing unit is allocated to each of convolution layers and the residual layer, so that an acquisition source of input data is determined in advance in each layer of the integration layer. Therefore, when each layer performs processing, there is no need to search for input data, and the throughput of data transfer between layers is improved. Furthermore, as illustrated in Fig. 8, the storage unit 24B allocated to the residual layer is connected to a convolution layer. Therefore, a processing result by the residual layer can be input to the convolution layer, and processing in the integration layer can be continuously performed. Furthermore, as illustrated in Fig. 8, the processing unit 22A in each of the convolution layers is connected to the storage unit 24A and an external memory. Therefore, the processing unit 22A can select an output destination of a processing result from the external memory and the storage unit 24A. Therefore, the processing unit 22A can select the external memory or the storage unit 24A and output a processing result of any convolution layer in the integration layer including a plurality of convolution layers.

As described above, in the convolutional neural network inference processing device 10 of the second embodiment, a processing unit is allocated to each layer in an integration layer, and performs processing as an integration layer by each performing processing. As a result, the throughput of data transfer of each layer in an integration layer is improved. Furthermore, even in a case where the number of layers that belong to an integration layer is smaller than the number of processing units, processing of each layer in the integration layer can be performed and a processing result can be output to the external memory.

Note that a mode has been described in which an integration layer according to the above embodiment includes the convolution layer A that performs 1 * 1 convolution processing, the convolution layer B that performs 3 * 3 convolution processing, and the residual layer. However, the present invention is not limited thereto. For example, it may include a single convolution layer and a residual layer, or may include three or more convolution layers and a residual layer.

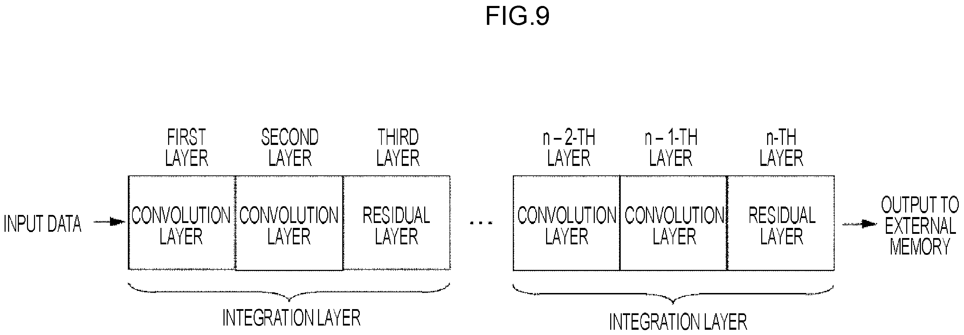

Furthermore, in the above embodiment, a mode has been described in which a processing result is output to the external memory in a case where processing of one integration layer is performed. However, the present invention is not limited thereto. A processing result may be output to the external memory in a case where processing of a plurality of integration layers is performed. For example, as illustrated in Fig. 9, a plurality of integration layers may be combined, and a processing result of one integration layer may be input to the next integration layer, thereby continuously performing processing of the plurality of integration layers. In a case where processing of a plurality of integration layers is continuously performed, residual layers included in the integration layers each add past layer data generated from intermediate data by a convolution layer that belongs to the same integration layer as an addition target to a processing result by a plurality of convolution layers that belongs to the same integration layer. As a result, occurrence of inconsistency due to addition of data by different integration layers can be suppressed.

Furthermore, in the embodiment described above, a mode has been described in which past layer data is 7 * 7 data. However, the present invention is not limited thereto. The past layer data may be changed according to a processing result by a plurality of convolution layers. For example, in a case where a processing result by a plurality of convolution layers is data of 10 * 10, the past layer data is data of 10 * 10. That is, the past layer data may have any size as long as the size corresponds to the size of data of a processing result by a plurality of convolution layers.

The inference processing, which is performed by the CPU reading software (program) in each of the above embodiments, may be performed by various processors other than the CPU. Examples of the processor in this case include a programmable logic device (PLD) in which a circuit configuration can be changed after manufacturing such as a field-programmable gate array (FPGA), and a dedicated electric circuit that is a processor having a circuit configuration exclusively designed for performing specific processing such as an application specific integrated circuit (ASIC). Further, the inference processing may be performed by one of the various processors or may be performed by a combination of two or more processors of the same type or different types (e.g. a combination of a plurality of FPGAs or a combination of a CPU and an FPGA). Furthermore, a hardware structure of the various processors is, more specifically, an electric circuit in which circuit elements such as semiconductor elements are combined.

Further, in each of the above embodiments, a mode in which the inference processing program is stored (installed) in advance in the storage 14 has been described, but the present invention is not limited thereto. The program may be provided by being stored in a non-transitory storage medium such as a compact disk read only memory (CD-ROM), a digital versatile disk read only memory (DVD-ROM), and a universal serial bus (USB) memory. Alternatively, the program may be downloaded from an external device via a network.

Regarding the above embodiments, the following supplements are further disclosed.

### (Supplement 1)

A convolutional neural network inference processing device including a memory and at least one processor connected to the memory, in which the processor is a convolutional neural network inference processing device that performs processing in a convolutional neural network including a plurality of convolution layers and a residual layer that adds intermediate data related to the plurality of convolution layers as an addition target to a processing result by the plurality of convolution layers for each tile that is data obtained by dividing input data into a predetermined size, in which the convolutional neural network inference processing device stores the intermediate data, stores inconsistency data that is data at a portion at which there is inconsistency between the processing result and the intermediate data, stores past layer data that is an addition target in a residual layer generated using inconsistency data related to the tile for which processing has been performed in the past and the intermediate data, and performs processing by the plurality of convolution layers and processing by a residual layer that adds the past layer data to the processing result.

### (Supplement 2)

A non-transitory storage medium in which a program that can be performed by a computer is stored such that processing in a convolutional neural network including a plurality of convolution layers and a residual layer that adds intermediate data related to the plurality of convolution layers as an addition target to a processing result by the plurality of convolution layers is performed for each tile that is data obtained by dividing input data into a predetermined size, in which the processing in a convolutional neural network includes storing the intermediate data, storing inconsistency data that is data at a portion at which there is inconsistency between the processing result and the intermediate data, storing past layer data that is an addition target in a residual layer generated using inconsistency data related to the tile for which processing has been performed in the past and the intermediate data, and performing processing by the plurality of convolution layers and processing by a residual layer that adds the past layer data to the processing result.

### Reference Signs List

10 Neural network inference processing device
22, 22A, 22B Processing unit
24, 24A, 24B, 24C Storage unit
25, 25A, 25B Intermediate data storage unit
26 Inconsistency data storage unit
27 Past layer data storage unit
28, 28A, 28B Margin data storage unit
100 Neural network

## Claims

1. A convolutional neural network inference processing device that performs processing in a convolutional neural network including a plurality of convolution layers and a residual layer that adds intermediate data related to the plurality of convolution layers as an addition target to a processing result by the plurality of convolution layers for each tile that is data obtained by dividing input data into a predetermined size, the convolutional neural network inference processing device comprising:
an intermediate data storage unit that stores the intermediate data;
an inconsistency data storage unit that stores inconsistency data that is data at a portion at which there is inconsistency between the processing result and the intermediate data;
a past layer data storage unit that stores past layer data that is an addition target in a residual layer generated using inconsistency data related to the tile for which processing has been performed in the past and the intermediate data; and
a processing unit that performs processing by the plurality of convolution layers and processing by the residual layer that adds the past layer data to the processing result.

2. The convolutional neural network inference processing device according to claim 1, further comprising a margin data storage unit that stores data of a portion in contact with an adjacent tile in the intermediate data as margin data,
wherein the processing unit combines the margin data stored in the margin data storage unit with the intermediate data, and performs processing by a convolution layer related to the plurality of convolution layers.

3. The convolutional neural network inference processing device according to claim 2, wherein the processing unit performs processing by the convolution layer by expanding a dimension of the intermediate data by combining the margin data with the intermediate data.

4. The convolutional neural network inference processing device according to claim 2 or 3, wherein:
the processing unit, the intermediate data storage unit, and the margin data storage unit corresponding to each of the plurality of convolution layers and a residual layer, are allocated to each of the plurality of convolution layers and the residual layer, and
the processing unit performs processing by each of the convolution layer and the residual layer using predetermined intermediate data stored in the intermediate data storage unit and margin data stored in the margin data storage unit.

5. The convolutional neural network inference processing device according to claim 4, wherein the processing unit is further connected to an external memory, and can select the external memory or the intermediate data storage unit as an output destination of the processing result.

6. The convolutional neural network inference processing device according to any one of claims 1 to 5, wherein the past layer data storage unit combines inconsistency data related to an adjacent tile for which processing has been performed in the past and the intermediate data, and stores the combined data as the past layer data.

7. The convolutional neural network inference processing device according to any one of claims 1 to 6, wherein:
the neural network includes, as an integration layer, a layer that performs a series of processing in the plurality of convolution layers, which are continuous, and in the residual layer, and
the processing unit performs processing, in an integration layer to which the residual layer belongs, of adding the past layer data generated using the intermediate data related to the integration layer to the processing result related to the integration layer.

8. A convolutional neural network inference processing method of performing processing in a convolutional neural network including a plurality of convolution layers and a residual layer that adds intermediate data related to the plurality of convolution layers as an addition target to a processing result by the plurality of convolution layers for each tile that is data obtained by dividing input data into a predetermined size, the convolutional neural network inference processing method comprising:
storing the intermediate data;
storing inconsistency data that is data at a portion at which there is inconsistency between the processing result and the intermediate data;
storing past layer data that is an addition target in a residual layer generated using inconsistency data related to a tile for which processing has been performed in the past and the intermediate data; and
performing processing by the plurality of convolution layers and processing by a residual layer that adds the past layer data to the processing result.
